(19) Europäisches Patentamt

European Patent Office

Office européen des brevets

(11) Publication number: **0 545 463 B1**

(12) EUROPEAN PATENT SPECIFICATION

(45) Date of publication of patent specification: **26.04.95**  (51) Int. Cl.⁶: **A23D 9/00**, A23G 3/00, A23G 1/00

(21) Application number: **92203562.1**

(22) Date of filing: **19.11.92**

(54) **Non-tempering confectionery fat.**

(30) Priority: **26.11.91 EP 91310850**

(43) Date of publication of application:
**09.06.93 Bulletin 93/23**

(45) Publication of the grant of the patent:
**26.04.95 Bulletin 95/17**

(84) Designated Contracting States:
**AT BE CH DE DK ES FR GB GR IE IT LI NL PT SE**

(56) References cited:
**EP-A- 0 186 244**
**EP-A- 0 354 025**
**EP-A- 0 428 200**
**US-A- 4 072 766**

**DATABASE WPIL Section Ch, Week 8939, Derwent Publications Ltd., London, GB; class D, AN 89-282409**

(73) Proprietor: **UNILEVER N.V.**
**P.O. Box 760**
**NL-3000 DK Rotterdam (NL)**
(84) Designated Contracting States:
**BE CH DE DK ES FR GR IT LI NL PT SE AT**

(73) Proprietor: **UNILEVER PLC**
**Unilever House**
**Blackfriars**
**P.O. Box 68**
**London EC4P 4BO (GB)**
(84) Designated Contracting States:
**GB IE**

(72) Inventor: **Pierce, John Hugh, Unilever Research Colworth**
**Laboratory,**
**Colworth House**
**Sharnbrook,**
**Bedford, MK44 iLO (GB)**
Inventor: **Ouinlan, Paul Thomas, Unilever Research Colworth**
**Laboratory,**
**Colworth House**
**Sharnbrook,**
**Bedford, MK44 iLO (GB)**

(74) Representative: **Sikken, Antonius H. J. M. et al**
**UNILEVER N.V.,**
**Patent Division,**
**P.O. Box 137**
**NL-3130 AC Vlaardingen (NL)**

**Description**

Confectionery fats that are used for the preparation of confectionery products often need to be tempered in order to bring the triglycerides into the desired stable crystal form. This is especially true of fats based on symmetrical mono-unsaturated triglycerides of the SUS type, such as cocoa butter and cocoa-butter substitutes containing shea, illipe or palm oil fractions. However, tempering is a difficult, sophisticated, time- and energy-consuming technique and therefore industry would prefer to avoid tempering, if possible.

For this purpose, much effort has been spent finding vegetable fat compositions that do not need to be tempered. Solutions were found in the use of lauric-type fats and in fats high in trans-fatty acids. However, the use of these fats entailed other problems as lauric fats hydrolyze easily, leading to an undesirable off-taste, while transfatty acids have an unknown dietary significance and can also lead to post-hardening during product storage, causing a poor mouthfeel.

Efforts over many years to derive satisfactory vegetable-based, non-tempering, non-trans, non-post-hardening, non-lauric confectionery fats for stable, bloom-resistant products have so far been unsuccessful.

In BP 841,316 and BP 841,317 the use of lard and tallow animal fat fractions is disclosed as additives to cocoa butter and palm triglycerides for incorporation in chocolate. The lard fractions disclosed are known to contain triglycerides of the SSU type but the disclosed fractions are incorporated with up to 60 wt.% of fats containing high amounts (> 75%) of SUS triglycerides for their intended use.

In EP 354,025 a fat composition is disclosed that contains at least 20 wt.% of triglycerides of the SSU type (S = saturated fatty acids; U = unsaturated fatty acids). These fats are reported to prevent bloom formation of confectionery fats, in particular in chocolate. According to the Examples, only limited amounts of SSU are added to the fat composition. Therefore, in all the cases where the SSU fat was added to a fat requiring tempering, tempering still had to be performed. Only when non-tempering fats were used that are high in trans-fatty acids could tempering be omitted.

We have now found new all-vegetable, non-tempering, non-lauric fat compositions useful for confectionery products in which properties, such as demoulding behaviour, gloss, hardness and melt-down remain surprisingly good.

Our new non-tempering, non-trans, all-vegetable confectionery fat compositions comprise at least a cocoa-butter replacement fat A that is high in SSU and a fat B that is high in S'OS', wherein fat A displays a ratio between the solid fat indices, measured at 30°C, stabilized and unstabilized (NMR pulse) of

$$\frac{N30 \ (stab.)}{N30 \ (unstab.)} = 1\text{--}3$$

and wherein fats A and B are present in ratios providing a fat blend with an SSU content of at least 50 wt.% and an S'OS' content of less than 30 wt.%, wherein S = saturated fatty acid having $C_{16}$-$C_{24}$; S' = saturated fatty acid having $C_{16}/C_{18}$, O = oleic acid and U = predominantly oleic and/or linoleic acid.

$N_{30}$ (stab)-values are conveniently measured after rapidly cooling the fat from 80°C to 0°C, keeping it at 0°C for 1.5 hrs; 40 hrs at 25°C; 1.5 hrs at 0°C; 1 hr at 20°C; 1 hr at 25°C and 1 hr at 30°C.

$N_{30}$ (unstab) were measured after the following regime: cooling from 80°C to 0°C; 1.5 hrs at 0°C; 1 hr at 20°C; 1 hr at 25°C and 1 hr at 30°C.

Although according to above the $N_{30}$ ratio applies for fat A, it is very convenient when also the blend of fats A and B meets this same requirement.

Preferred ranges for the S'OS' content are : less than 20 wt.%, in particular 5-15 wt.%; and for the SSU content : more than 60 wt.%, in particular 65-75 wt.%.

In this way, compositions are obtained wherein fats A and B are completely compatible. For this purpose, it is preferred that the ratio between the N-values at 30°C is less than 2.

Fat A is advantageously a fat containing at least 60 wt.%, in particular at least 75 wt.% of SSU. Very convenient is a fat A wherein more than 60 wt.% of PPO (P = palmitic) is present.

Very good results were obtained by applying a fat A with a very sharp N-profile. An N-profile of $N_{20}$ > 80 and $N_{35}$ < 8.0 (NMR pulse, not stabilized) is very suitable.

Examples of very suitable fats A are : fractions from an enzymatically made product from the conversion of a fat rich in saturated fatty acids, in particular a palm top fraction high in $P_3$ and a compound providing oleic acid moieties (as disclosed in EP 209,327).

Fat B is a fat that has a high content of S'OS'. Preferred fats have an S'OS' content of at least 70 wt.%. The most preferred fat B is cocoa butter.

For the use of blends of fats A and B in confectionery product, fats A and B are blended in ratios of 95-65 wt.% of fat A and 5-35 wt.% of fat B. In this way, the desired fat compositions can easily be obtained.

Another part of our invention is the use of a fat A that is high in SSU and preferably contains at least 60 wt.% of SSU in chocolate compositions in order to obtain non-temper chocolate that demoulds easily and at the same time displays good gloss, hardness and melt-down properties.

Confectionery products containing the fat compositions disclosed above are also part of our invention.

## EXAMPLES I and II

I: A small quantity of chocolate (100 g) was made initially using a typical coating recipe (Table I) with a fat rich in PPO (see Table II) replacing CB. The chocolate was not refined or conched and was used to establish satisfactory cooling tunnel conditions for moulding 50 g-bars of chocolate, commencing at 50°C. This indicated that cooling tunnel temperatures should not be as low as 10°C or as high as 19°C for satisfactory demoulding. Avoidance of low cooling tunnel temperatures has throughput and energy benefits.

II: A further quantity of chocolate coating was made (Table III), following standard refining and conching procedures. This chocolate was diluted with standard CB plain chocolate to give coatings ranging in CB content from 4.8% to 28.7%.

Typical $N_{30}$ (stab)/$N_{30}$ (unstab) measurements for such coating fat blends are shown in Table IV.

The molten chocolates were directly block-moulded in a cooling tunnel without tempering and stored at various temperatures. Chocolate hardness was typical of plain chocolate (Table V) and gloss retention was good in products containing less than 15% CB in the fat phase (Table VI).

TABLE I

| Chocolate Coating Recipe (100 g) | |
| --- | --- |
| Cocoa powder (10/12) | 14% |
| Skimmed milk powder | 7% |
| Sugar | 48% |
| Fat | 31% |
| Lecithin | 0.4% |
| [CB 4.8% on fat phase] | |

The ingredients were thoroughly mixed at 50-60°C without refining or conching.

TABLE II

| Composition of PPO fat | |
|---|---|
| TG | |
| SSS | 6.7 |
| SOS | 2.0 |
| OSS | 77.1 |
| SSLn | 4.5 |
| SOO | 1.1 |
| OSO | 7.8 |
| SOLn | 0.6 |
| FAME | |
| C14:0 | 0.5 |
| C16:0 | 55.6 |
| C18:0 | 7.4 |
| C18:1 | 33.1 |
| C18:2 | 1.9 |

4

## TABLE III

### Chocolate coating recipe (refined and conched)

### Refining Recipe

| | |
|---|---|
| Cocoa powder | 16% |
| Skimmed milk powder | 8% |
| Sugar | 54.5% |
| Fat | 21% |
| Lecithin | 0.2% |

### Conching Recipe (6 hours at 50-60°C)

| | |
|---|---|
| Refined paste | 88% |
| Fat | 12% |
| Lecithin | 0.2% |

### Chocolate Blends

| Coating rich in OPP | Plain chocolate | Chocolate blend Fat phase CB |
|---|---|---|
| 100% | 0% | 4.8% |
| 95% | 5% | 9.7% |
| 90% | 10% | 14.5% |
| 85% | 15% | 19.0% |
| 75% | 25% | 28.7% |

TABLE IV

| Fat blend | | N30 | | |
|---|---|---|---|---|
| Fat A (PPO rich) | Fat B (SOS rich) | N30 (stab) | N30 (unstab) | N30 ratio |
| 100 | 0 | 45.2 | 37.8 | 1.2 |
| 90 | 10 | 28.1 | 25.7 | 1.1 |
| 80 | 20 | 23.0 | 18.4 | 1.25 |
| 70 | 30 | 32.6 | 14.3 | 2.3 |

TABLE V

| Hardness of chocolate coating rich in OPP (2 weeks' storage) | | | | |
|---|---|---|---|---|
| % CB on chocolate coating fat phase | Penetration ($mm^{-1}$) | | Hardness (kg $cm^{-2}$) | |
| | 20°C | 25°C | 20°C | 25°C |
| 4.8% | 10.5 | 18.5 | 68 | 32 |
| 9.7% | 11.0 | 22.0 | 64 | 26 |
| 14.5% | 11.5 | 26.0 | 61 | 21 |
| Typical plain chocolate | 13 | 20 | 52 | 29 |

## TABLE VI

### Gloss Retention/Bloom in Chocolate coatings

| % Cocoa butter on fat phase | Surface conditions 2 months at 20°C | Surface condition 1 month x 12 hr cycles 15°C/25°C |
|---|---|---|
| 4.8% | Good | Fairly good gloss, bloom-free |
| 9.7% | Good | Fairly good gloss, bloom-free |
| 14.5% | Good | Dull, patchy, growth of large crystals |
| 19.0% | Fairly good, bloom-free | Dull, patchy, growth of large crystals |
| 28.7% | Fairly good, bloom-free | Completely dull |

EXAMPLE III

In a further experiment two separate chocolate coatings were made (Table VII), following standard refining and conching procedures using:

7

(i) a fat A rich in OPP and
(ii) a fat B rich in POP

These coatings were blended to give coatings ranging in SOS content from 0% to 20% (Table VIII).

The molten chocolates were directly block-moulded in a cooling tunnel without tempering and stored at 20°C. Gloss retention was satisfactory in coatings containing up to 20% SOS triglycerides on the fat phase (Table VIII).

## TABLE VII

### Refining Recipe

| | |
|---|---|
| Cocoa powder | 16% |
| Skimmed milk powder | 8% |
| Sugar | 54.5% |
| Fat A or Fat B | 21% |
| Lecithin | 0.2% |

### Conching recipe (5 hours at 50-60°C)

| | |
|---|---|
| Refined paste | 8.8% |
| Fat A or Fat B | 12% |
| Lecithin | 0.2% |

### Chocolate blends

| Coating rich in OPP | Coating rich in POP | Coating blend fat phase | |
|---|---|---|---|
| | | S'S'U | S'OS' |
| 100 | 0 | 79 | 6 |
| 90 | 10 | 72 | 13 |
| 80 | 20 | 65 | 20 |
| 70 | 30 | 57 | 27 |

TABLE VIII

| Gloss retention in chocolate coatings at 20°C | | |
|---|---|---|
| Coating blend fat phase (%) | Chocolate surface | |
| | 1 month | 3 months |
| 79 S'S'O/6 S'OS' | good | fair |
| 72 S'S'O/13 S'OS' | good | good |
| 65 S'S'O/20 S'OS' | good | fair |
| 57 S'S'O/27 S'OS' | dull | - |
| S' = saturated fatty acids having $C_{16}$ and $C_{18}$ in a ratio of about 8. | | |

**Claims**

1. Non-tempering, non-trans, all-vegetable confectionery fat composition comprising at least a cocoa butter replacement fat A which is high in SSU and a fat B which is high in S'OS', wherein fat A displays the following ratio of solid fat indices, stabilized and unstabilized (NMR pulse), at 30°C :

$$\frac{N30 \ (stab.)}{N30 \ (unstab.)} = 1\text{-}3$$

   and wherein fats A and B are present in ratios providing a fat blend with an SSU content of at least 50 wt.% and an S'OS' content of less than 30 wt.%, wherein S = saturated fatty acid having $C_{16}$-$C_{24}$; S' = saturated fatty acid having $C_{16}$-$C_{18}$, O = oleic acid, U = predominantly oleic and/or linoleic acid.

2. Fat composition according to Claim 1, wherein the S'OS' content is less than 20 wt.%, in particular 5-15 wt.%, while the SSU content is more than 60 wt.%, in particular 65-75 wt.%.

3. Fat composition according to Claims 1 and 2, wherein fat A is a hard fat containing at least 60 wt.%, preferably at least 75 wt.%, of SSU.

4. Fat composition according to Claim 3, wherein fat A is a fat wherein more than 60 wt.% of PPO (P = palmitic) is present.

5. Fat composition according to Claims 1-4, wherein fat A displays an N-profile (NMR pulse, not stabilized) of $N_{20} > 80$ and $N_{35} < 8.0$.

6. Fat composition according to Claims 1-5, wherein fat A is a fraction from an enzymatically made product from the conversion of a fat rich in saturated fatty acid, in particular palm oil top fraction which is high in $P_3$ and a compound providing oleic acid moieties.

7. Fat composition according to Claims 1-2, wherein fat B contains at least 70 wt.% of S'OS'.

8. Fat composition according to Claim 7, wherein fat B is cocoa butter.

9. Fat composition according to Claims 1-2, wherein fat A and fat B are present in ratios of 95-65% A : 5-35% B.

10. Confectionery products containing at least the fat compositions according to Claims 1-9.

11. Use of SSU-type triglycerides in chocolate compositions wherein a fat A which is high in SSU, preferably containing at least 60 wt.% of SSU, is used in chocolate compositions in order to obtain non-temper chocolate that demoulds easily and at the same time displays good gloss, hardness and melt-down properties.

**Patentansprüche**

1. Kein Temperieren erfordernde, trans-Fettsäure-freie, rein pflanzliche Süßwarenfettzusammensetzung, umfassend mindestens ein hoch-SSU-haltiges Kakaobutter-Ersatzfett A und ein hoch-S'OS'-haltiges Fett B, wobei Fett A ein Verhältnis zwischen den bei 30°C gemessenen stabilisierten und unstabilisierten Festfettkennzahlen (Puls-NMR) von

$$\underline{\frac{N30 \ (stab.)}{N30 \ (unstab.)}} = 1-3$$

aufweist und wobei die Fette A und B in Verhältnissen vorliegen, die eine Fettmischung mit einem SSU-Gehalt von mindestens 50 Gew.-% und einem S'OS' Gehalt von weniger als 30 Gew.-% ergeben, worin S = gesättigte Fettsäure mit $C_{16}$-$C_{24}$, S' = gesättigte Fettsäure mit $C_{16}$-$C_{18}$, O = Ölsäure und U = vorwiegend Öl- und/oder Linolsäure.

2. Fettzusammensetzung nach Anspruch 1, wobei der S'OS'-Gehalt weniger als 20 Gew.-%, insbesondere 5 bis 15 Gew.-%, beträgt, während der SSU-Gehalt größer als 60 Gew.-%, insbesondere 65 bis 75 Gew.-%, ist.

3. Fettzusammensetzung nach Anspruch 1 und 2, wobei Fett A ein Hartfett ist, enthaltend mindestens 60 Gew.-%, vorzugsweise mindestens 75 Gew.-%, SSU.

4. Fettzusammensetzung nach Anspruch 3, wobei Fett A ein Fett ist, in dem mehr als 60 Gew.-% PPO (P = Palmitinsäure) vorliegen.

5. Fettzusammensetzung nach einem der Ansprüche 1 bis 4, worin Fett A ein N-Profil (Puls-NMR, nicht stabilisiert) von $N_{20} > 80$ und $N_{35} < 8,0$ zeigt.

6. Fettzusammensetzung nach einem der Ansprüche 1 bis 5, wobei Fett A eine Fraktion eines enzymatisch hergestellten Produkts aus der Umwandlung eines Fetts mit hohem Gehalt an gesättigten Fettsäuren, insbesondere einer hoch-$P_3$-haltigen Palmöloberfraktion, und einer Ölsäurereste liefernden Verbindung, ist.

7. Fettzusammensetzung nach Anspruch 1 oder 2, wobei Fett B mindestens 70 Gew.-% S'OS' enthält.

8. Fettzusammensetzung nach Anspruch 7, wobei Fett B Kakaobutter ist.

9. Fettzusammensetzung nach Anspruch 1 oder 2, wobei Fett A und Fett B in Verhältnissen von 95 bis 65% A : 5 bis 35% B vorliegen.

10. Süßwarenprodukte, enthaltend mindestens eine Fettzusammensetzung nach einem der Ansprüche 1 bis 9.

11. Verwendung von Triglyceriden des SSU-Typs in Schokoladenzusammensetzungen, wobei ein hoch-SSU-haltiges Fett A, vorzugsweise enthaltend mindestens 60 Gew.-% SSU, in Schokoladenzusammensetzungen dazu verwendet wird, Schokolade zu erhalten, die kein Temperieren erfordert und sich leicht ausklopfen läßt und gleichzeitig zufriedenstellende Glanz-, Härte- und Schmelzeigenschaften zeigt.

**Revendications**

1. Composition de graisse de confiserie non conditionnée, non trans et entièrement végétale, qui comprend au moins une graisse A de remplacement du beurre de cacao qui est riche en SSU et une graisse B riche en S'OS', dans laquelle la graisse A présente le rapport suivant d'indices de graisses solides, stabilisées et non stabilisées (impulsion RMN), à 30°C :

$$\frac{N30 \ (stab)}{N30 \ (non \ stab)} = 1\text{-}3$$

et dans laquelle les graisses A et B sont présentes en des rapports assurant un mélange gras ayant une teneur en SSU d'au moins 50% et une teneur en S'OS' inférieure à 30% en poids, dans laquelle S = acide gras saturé en $C_{16-24}$, S' = acide gras saturé en $C_{16-18}$, O = acide oléique, U = principalement acides oléique et/ou linoléique.

2. Composition de graisse selon la revendication 1, dans laquelle la teneur en S'OS' est inférieure à 20% en poids, en particulier de 5 à 15% en poids, alors que la teneur en SSU est supérieure à 60% en poids, en particulier de 65 à 75% en poids.

3. Composition de graisse selon les revendications 1 et 2, dans laquelle la graisse A est une graisse dure contenant au moins 60% en poids et de préférence au moins 75% en poids de SSU.

4. Composition de graisse selon la revendication 3, dans laquelle la graisse A est une graisse dans laquelle sont présents plus de 60% en poids de PPO (P = palmitique).

5. Composition de graisse selon les revendications 1 à 4, dans laquelle la graisse A affiche un profil N (impulsion RMN, non stabilisée) de $N_{20}$ plus grand que 80 et $N_{35}$ plus petit que 8,0.

6. Composition de graisse selon les revendications 1 à 5, dans laquelle la graisse A est une fraction d'un produit préparé par voie enzymatique à partir de la conversion d'une graisse riche en acide gras saturé, en particulier en fraction supérieure d'huile de palme qui est riche en $P_3$ et un composé donnant des fragments d'acide oléique.

7. Composition de graisse selon les revendications 1 et 2, dans laquelle la graisse B contient au moins 70% en poids de S'OS'.

8. Composition de graisse selon la revendication 7, dans laquelle la graisse B est du beurre de cacao.

9. Composition de graisse selon les revendications 1 et 2, dans laquelle la graisse A et B sont présentes en des rapports de 95-65% A/ 5-35% B.

10. Produits de confiserie contenant au moins les compositions de graisse selon les revendications 1 à 9.

11. Utilisation de triglycérides du type SSU dans des compositions de chocolat dans lesquelles une graisse A riche en SSU, contenant de préférence au mois 60% en poids de SSU, est utilisée dans des compositions de chocolat afin d'obtenir un chocolat non conditionné qui se démoule facilement et présente en même temps de bonnes propriétés de brillance, de dureté et de fusion.